(19) **Europäisches Patentamt / European Patent Office / Office européen des brevets**

(11) **EP 1 503 220 B1**

(12) **FASCICULE DE BREVET EUROPEEN**

(45) Date de publication et mention
de la délivrance du brevet:
**14.02.2007 Bulletin 2007/07**

(51) Int Cl.:
***G01S 5/14*** *(2006.01)*

(21) Numéro de dépôt: **04291781.5**

(22) Date de dépôt: **12.07.2004**

(54) **Détermination de positions de terminaux mobiles à l'aide de données d'assistance transmises sur requète**

Positionsbestimmung einer Mobilendgerät mittels auf Anfrage gesendeten Hilfsdaten

Position determination of mobile terminals by means of assistance data transmitted on request

(84) Etats contractants désignés:
**AT BE BG CH CY CZ DE DK EE ES FI FR GB GR HU IE IT LI LU MC NL PL PT RO SE SI SK TR**

(30) Priorité: **01.08.2003 FR 0309509**
**10.03.2004 FR 0450480**

(43) Date de publication de la demande:
**02.02.2005 Bulletin 2005/05**

(60) Demande divisionnaire:
**06118126.9 / 1 724 607**
**06118130.1 / 1 724 608**

(73) Titulaire: **ALCATEL**
**75008 Paris (FR)**

(72) Inventeurs:
- **Monnerat, Michel**
**31000 Toulouse (FR)**
- **Masson, Arnaud**
**31170 Tournefeuille (FR)**
- **Lobert, Bruno**
**31320 Pechabou (FR)**

(74) Mandataire: **Hedarchet, Stéphane et al**
**COMPAGNIE FINANCIERE ALCATEL**
**Département Propriété Industrielle**
**54, rue La Boétie**
**75008 Paris (FR)**

(56) Documents cités:
| | |
|---|---|
| **EP-A- 1 008 862** | **US-A- 5 726 659** |
| **US-A- 6 075 987** | **US-A- 6 133 874** |
| **US-A1- 2002 050 944** | **US-A1- 2002 169 550** |
| **US-A1- 2002 196 181** | **US-B1- 6 323 803** |
| **US-B1- 6 400 319** | **US-B1- 6 529 830** |

- **GAUTHIER L ET AL: "EGNOS: THE FIRST STEP IN EUROPE'S CONTRIBUTION TO THE GLOBAL NAVIGATION SATELLITE SYSTEM" ESA BULLETIN, ESA SCIENTIFIC AND PUBLICATIONS BRANCH. NOORDWIJK, NL, no. 105, février 2001 (2001-02), pages 35-42, XP001025014 ISSN: 0376-4265**
- **RODNEY WALKER AND JIZHANG SANG: "Mission Planning for High Precision RTK GPS Surveying Using Accurate Digital Terrain Information" INSTITUTE OF NAVIGATION, NTM 97, 1997, pages 367-373, XP002308325**

Printed by Jouve, 75001 PARIS (FR)

## Description

L'invention concerne la détermination du positionnement par satellites de terminaux mobiles.

On entend ici par « terminal mobile » aussi bien les dispositifs (ou récepteurs) dédiés exclusivement au positionnement par satellites que les terminaux de communication équipés d'un dispositif de positionnement par satellites, comme par exemple des téléphones mobiles, ou des assistants personnels numériques (ou PDA), éventuellement de type communicant.

Comme le sait l'homme de l'art, le positionnement par satellites consiste en un enchaînement de deux étapes. La première étape, dite d'acquisition, consiste à déterminer, au niveau du terminal mobile concerné, les codes pseudo-aléatoires qui modulent des signaux provenant de satellites, dits « en vue », appartenant à une constellation de satellites de positionnement et rapportés à un temps de référence, généralement appelé « temps système ». Il s'agit en fait de « comparer » les signaux reçus des satellites en vue à des répliques de signaux résultant d'hypothèses sur le temps système et sur la fréquence de cadencement des satellites, afin d'en déduire les codes pseudo-aléatoires qui modulent lesdits signaux reçus ou en d'autres termes de synchroniser l'horloge de cadencement du terminal et sa fréquence sur l'horloge et la fréquence de chaque satellite en vue. Pour ce faire, on effectue habituellement des mesures de corrélation reposant sur des couples d'hypothèses temporelle et fréquentielle.

On entend ici par « constellation de satellites de positionnement », un réseau de positionnement de type RNSS (pour « Radio Navigation Satellite Service »), comme par exemple le réseau GPS, ou le réseau GLONASS, ou encore le futur réseau GALILEO.

La seconde étape consiste à déterminer la position du terminal à partir des codes acquis et de données de navigation notamment contenues dans les signaux reçus. Cette seconde étape peut être plus précisément subdivisée en trois sous-étapes : une sous-étape de détermination à partir des codes pseudo-aléatoires acquis des temps de propagation des signaux entre chacun des satellites en vue et le terminal, une sous-étape de détermination, à partir des données de navigation contenues dans les signaux et des temps de propagation, de pseudo-distances entre le terminal et chacun des satellites en vue, et une sous-étape de détermination de la position du terminal à partir des pseudo-distances (au moins par une quadrilatération, et plus généralement par une résolution numérique de type méthode des moindres carrés à quatre inconnues et au moins quatre mesures). Quatre mesures sont nécessaires pour résoudre les quatre inconnues. Dans certaines conditions seules trois mesures sont utilisées en fixant une inconnue, typiquement l'altitude (Z) du récepteur, ou bien on peut effectuer des hybridations avec des mesures extérieures.

La précision de chaque temps de propagation, et donc de chaque pseudo-distance, détermine directement la précision de la position. Or, la précision de chaque temps de propagation dépend de la qualité de l'acquisition des codes pseudo-aléatoires du signal reçu correspondant, laquelle est dépendante de la qualité dudit signal reçu. Par conséquent, lorsque l'un au moins des signaux reçus d'un satellite en vue est de mauvaise qualité, ce qui est relativement fréquent, notamment dans les environnements accidentés ou encombrés, la position déterminée est généralement entachée d'erreur. On peut même se trouver momentanément dans l'impossibilité de déterminer la position du terminal, alors même que les signaux provenant des autres satellites en vue sont de bonne qualité.

L'invention a donc pour but d'améliorer la situation.

Elle propose à cet effet un procédé dédié à la détermination de la position d'un terminal mobile et comprenant, comme le procédé de l'art antérieur, une étape d'acquisition de codes pseudo-aléatoires, suivie d'une étape de détermination de la position du terminal à partir des codes pseudo-aléatoires acquis et des données de navigation contenues dans les signaux reçus.

Le procédé selon l'invention est défini dans la revendication 1. A l'étape d'acquisition :

- on transmet au terminal, de préférence à sa demande, des données d'assistance représentatives du temps de référence approximatif de la constellation et de sa position approximative,
- puis, on détermine des positions estimatives de la constellation, des distances estimatives entre le terminal et chacun des satellites en vue, et des effets doppler associés, en fonction de couples d'hypothèses portant sur le temps de référence approximatif et la position approximative reçus,
- puis, on détermine pour chaque couple d'hypothèses une réplique de signal correspondant aux positions et distances estimatives et aux effets doppler associés sur un intervalle de temps choisi, et
- on sélectionne le couple d'hypothèses qui correspond à la réplique de signal qui présente une corrélation maximale avec le signal reçu pendant l'intervalle de temps choisi, afin de déterminer les codes pseudo-aléatoires qui modulent chacun des signaux reçus.

En d'autres termes, on réalise une recherche « position géographique /temps système », en réalisant une corrélation du signal avec le signal composite égal à la somme des répliques affectées du retard et du doppler correspondant à une grille définissant la position du récepteur (et donc de son utilisateur) et le temps système.

Ainsi, contrairement au procédé antérieur, la détermination des codes pseudo-aléatoires, associés à chacun des signaux provenant des satellites en vue, s'effectue après une phase commune d'accumulation pendant une durée (intervalle) choisie de la puissance de tous les signaux reçus. Cela permet d'améliorer notablement le seuil de détection car toute la puissance disponible est cumulée lors de la recherche.

Le procédé selon l'invention peut comporter d'autres caractéristiques qui pourront être prises séparément ou en combinaison, et notamment :

- les données d'assistance sont transmises au terminal via le réseau de communications dont il dépend,
- les données d'assistance peuvent comporter des données « d'augmentation », telles que des éphémérides, provenant d'un système dit « d'augmentation », de type SBAS (pour « Satellite Based Augmentation System »),
- lorsque le terminal mobile est un terminal de communication appartenant à un réseau de communications cellulaire dont chaque cellule est gérée par une station de base, la position approximative est préférentiellement représentative de la cellule dans laquelle il est situé lorsqu'il requiert lesdites données d'assistance. Dans ce cas, il est avantageux de fournir au terminal des aides en fréquence et en temps grâce à la station de base, les aides en fréquence faisant référence à un recalage de son oscillateur local grâce à l'oscillateur de la station de base. A cet effet, on peut par exemple asservir l'horloge de cadencement du terminal, utilisée pour déterminer sa position, sur l'horloge de cadencement de la station de base qui gère la cellule dans laquelle il est situé,
- la sélection d'une réplique de signal peut consister à déterminer pour chaque réplique de signal une fonction représentative de son énergie de corrélation avec le signal reçu, cumulé dans le temps sur l'intervalle de temps choisi, puis à retenir la réplique de signal qui présente l'énergie la plus forte,
- les données d'assistance peuvent comprendre des données de navigation complémentaires choisies parmi les éphémérides des satellites en vue, des premières corrections temporelles des satellites en vue, représentatives de l'écart temporel entre le temps de référence et leur horloge de cadencement, des secondes corrections temporelles représentatives des perturbations induites par l'ionosphère sur la propagation des signaux transmis par les satellites en vue, et des données représentatives d'un modèle tridimensionnel (3D) de la cellule dans laquelle le terminal requérant est situé,
- on peut procéder au niveau de chaque terminal à la transmission à un serveur de données d'information (serveur d'assistance) représentatives de sa position, de manière à mémoriser cette position en correspondance de l'identifiant de la cellule dans laquelle il est situé. Dans ce cas, on peut également mémoriser des données auxiliaires, représentatives de la qualité des données d'information transmises, en correspondance de l'identifiant de la cellule. On peut ainsi générer un modèle tridimensionnel du réseau de communications à partir des identifiants de cellule et des données d'information et/ou données auxiliaires correspondantes. En d'autres termes, dans le cas d'un mode de fonctionnement de type « MS-assisted » ou « MS-Based », le terminal renvoie vers le serveur d'assistance sa position ainsi que le numéro de sa cellule. Le serveur peut donc tenir à jour un historique des positions (x, y, z) de tous les mobiles qui ont réalisé une localisation dans la cellule. Il en résulte un modèle numérique 3D de terrain ainsi que qu'une information sur la couverture de la cellule. Les endroits où aucun point n'aura été réalisé mettront en évidence un problème de couverture. De même en transmettant les conditions de réception, on peut améliorer le niveau de détail de la cartographie,

- on peut effectuer des mesures représentatives de la dynamique du terminal mobile, par exemple à l'aide de dispositifs micro-inertiels (de type MEMS), puis estimer, à partir de ces mesures et des données d'assistance, une vitesse, une accélération et une variation d'accélération par rapport à chaque satellite en vue, puis déduire de celles-ci une phase induite, et enfin déterminer la réplique de signal compte tenu de la phase induite.

L'invention porte également sur un terminal mobile comprenant des moyens d'acquisition de codes pseudo-aléatoires qui modulent des signaux reçus de satellites en vue appartenant à une constellation de satellites de positionnement et rapportés à un temps de référence, par « comparaison » à des répliques de signaux résultant d'hypothèses, et des moyens de calcul chargés de déterminer la position du terminal à partir des codes acquis et des données de navigation contenues dans les signaux reçus.

Ce terminal mobile est défini dans la revendication 15. Ses moyens d'acquisition sont chargés, lorsqu'ils reçoivent des données d'assistance représentatives d'un temps de référence approximatif et de la position approximative dudit terminal, de préférence consécutivement à une requête, de déterminer des positions estimatives de la constellation de satellites, des distances estimatives entre le terminal et chacun des satellites en vue, et des effets doppler associés, en fonction de couples d'hypothèses portant sur le temps de référence approximatif et la position approximative, puis de déterminer pour chaque couple d'hypothèses une réplique de signal correspondant aux positions et distances estimatives et aux effets doppler associés, sur un intervalle de temps choisi, et enfin de sélectionner le couple d'hypothèses qui correspond à la réplique du signal composite (somme des répliques affectées du doppler et du décalage temporel correspondant aux hypothèses) qui présente la corrélation maximale, sur l'intervalle de temps choisi, avec le signal reçu, afin de réaliser l'acquisition du signal (synchronisation sur les signaux des différents satellites ou ici pré-localisation du terminal (ou récepteur)).

Le terminal mobile selon l'invention peut comporter d'autres caractéristiques qui pourront être prises séparément ou en combinaison, et notamment :

- des moyens de réception agencés pour recevoir des trames SBAS d'un système d'augmentation, de type SBAS, couplé au système de navigation par satellites,

- il peut être agencé de manière à communiquer au sein d'un réseau de communications cellulaire, la position approximative reçue étant alors représentative de la cellule dans laquelle il est situé au moment où il a requis les données d'assistance. Dans ce cas, le terminal peut être agencé de manière à se servir d'aides en fréquence et en temps fournies par la station de base du réseau cellulaire à laquelle il est momentanément rattaché. Par exemple, l'horloge de cadencement des moyens d'acquisition est préférentiellement asservie sur l'horloge de cadencement de la station de base qui gère la cellule dans laquelle il est situé,

- des moyens d'acquisition chargés de corréler une réplique particulière avec le signal reçu pendant l'intervalle de temps choisi, par exemple à l'aide d'une fonction représentative d'une énergie de corrélation, afin d'identifier un code d'étalement,

- il peut être configuré de manière à transmettre à un serveur (d'assistance) des données d'information représentatives de sa position, afin que celles-ci puissent être stockées dans une base de données en correspondance de l'identifiant de la cellule dans laquelle il est situé,

- il peut comprendre un dispositif de mesure à micro inertie, agencé de préférence sous la forme d'un micro système électromécanique (ou MEMS) et propre à délivrer des mesures représentatives de la dynamique dudit terminal. Dans ce cas, les moyens d'acquisition sont agencés pour estimer à partir des mesures et des données d'assistance une vitesse, une accélération et une variation d'accélération par rapport à chaque satellite en vue, et déduire de celles-ci une phase induite, puis pour déterminer la réplique de signal compte tenu de la phase induite.

L'invention porte en outre sur un serveur d'assistance couplé à un réseau de communications cellulaire, et agencé de manière à transmettre à des terminaux mobiles du type de ceux présentés ci-avant, lorsqu'ils en font la demande, des données d'assistance, préférentiellement via leur réseau de communications mobile.

Ce serveur peut par exemple transmettre aux terminaux requérant des données d'assistance comprenant des données de navigation complémentaires choisies dans un groupe comprenant au moins des éphémérides des satellites en vue, des premières corrections temporelles des satellites en vue, représentatives de l'erreur d'horloge des satellites par rapport à l'heure de la constellation de satellites de positionnement, des secondes corrections temporelles représentatives des perturbations induites par l'ionosphère sur la propagation des signaux transmis par les satellites en vue et des données représentatives d'un modèle tridimensionnel de la cellule dans laquelle le terminal requérant est situé.

Le serveur peut également comprendre des moyens de traitement chargés, lorsqu'ils reçoivent des données d'information représentatives de la position d'un terminal, de les stocker dans une base de données en correspondance de l'identifiant de la cellule du réseau de communications cellulaire dans laquelle ce terminal est situé. Dans ce cas, les moyens de traitement peuvent être également agencés pour déterminer, des données auxiliaires représentatives de la qualité des données d'information reçues, puis les mémoriser en correspondance de l'identifiant de cellule.

Par ailleurs, les moyens de traitement peuvent être chargés de générer, puis de mémoriser dans la base de données, un modèle tridimensionnel du réseau de communications à partir des identifiants de cellules et des données d'information et/ou données auxiliaires correspondantes. Ils peuvent être également chargés d'extraire de la base de données une portion du modèle tridimensionnel du réseau de communications, représentative du modèle tridimensionnel de la cellule dans laquelle est situé le terminal requérant, de manière à lui transmettre cette portion de modèle 3D représentant le terrain de la cellule dans laquelle il se trouve. Le maillage (position géographique/temps système) est ainsi enrichi. De plus, cela peut permettre de déterminer la position du terminal mobile avec seulement trois satellites en vue (il n'y a plus alors que trois inconnues indépendantes puisque l'altitude Z est connue pour tout couple (X,Y)).

En variante, les moyens de traitement peuvent être seulement agencés pour extraire d'une base de données, dans laquelle sont stockées des portions d'un modèle tridimensionnel du réseau de communications en correspondance d'identifiants de cellules, la portion de modèle qui est stockée en correspondance de l'identifiant de la cellule dans laquelle un terminal requérant est situé, de manière à lui transmettre cette portion extraite.

L'invention est particulièrement bien adaptée, bien que de façon non limitative, aux signaux en bande L modulés en phase et à accès multiple, en particulier selon la technique dite W-CDMA. Par ailleurs, l'invention est particulièrement bien adaptée, bien que de façon non limitative, aux réseaux de positionnement par satellites de type GNSS, et plus particulièrement à ceux de type GPS, et aux systèmes d'augmentation de type SBAS.

D'autres caractéristiques et avantages de l'invention apparaîtront à l'examen de la description détaillée ci-après, et des dessins annexés, sur lesquels :

- la figure 1 illustre de façon schématique un exemple de réalisation d'une installation de télécommunications permettant la mise en oeuvre d'un procédé selon l'invention, et

- la figure 2 illustre de façon schématique un exemple de réalisation d'un terminal de communication mobile, selon l'invention.

Les dessins annexés pourront non seulement servir à compléter l'invention, mais aussi contribuer à sa définition, le cas échéant.

L'invention porte sur la détermination de positions de terminaux mobiles au sein d'une installation de télécommunications.

On entend ici par « installation de télécommunications », une installation comportant au moins un réseau de communications communiquant avec des terminaux mobiles et un système dit « d'assistance » (ou d'aide) chargé de diffuser des données d'assistance, et notamment des données de navigation complémentaires concernant un système de positionnement, comme par exemple un réseau de positionnement par satellites.

Par ailleurs, on entend ici par « terminal mobile » (UE), tout type de terminal capable de recevoir au moins des signaux contenant des données de navigation du réseau de positionnement par satellites et des données d'assistance du système d'assistance. Il pourra donc s'agir soit de simples dispositifs de positionnement par satellites portables, ou embarqués dans un véhicule terrestre, maritime ou aérien, et implémentant au moins une application liée au positionnement, soit de téléphones mobiles, d'assistants numériques personnels (ou PDA), ou d'ordinateurs portables équipés d'un tel dispositif de positionnement par satellites et implémentant également au moins une application liée au positionnement.

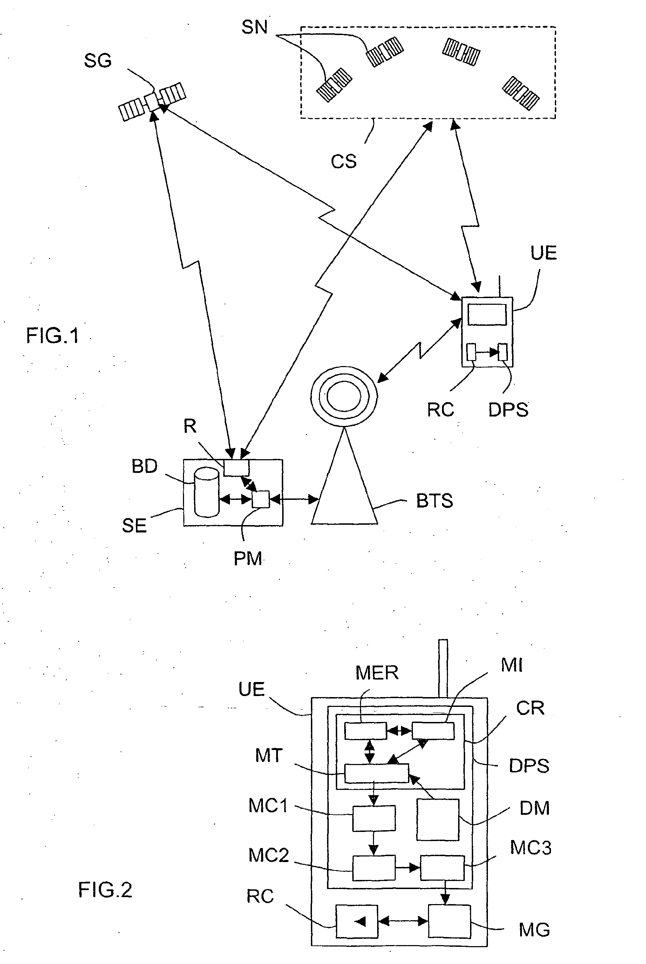

Dans ce qui suit on considèrera, à titre d'exemple, comme illustré sur la figure 1, que l'installation comporte non seulement au moins un réseau de communications (radio) mobile (matérialisé ici par l'une de ses stations de base BTS), mais également un réseau de positionnement par satellites (matérialisé par sa constellation CS de satellites SN). Ce réseau de communications mobile est ici de type cellulaire, comme par exemple les réseaux de type GSM/GPRS et UMTS (et tous leurs équivalents).

Bien entendu, l'installation pourrait être de type hybride. On entend ici par installation hybride une installation de communications par satellites comportant une ou plusieurs stations émettrices, un ou plusieurs satellites de télécommunications et une multiplicité de répéteurs terrestres implantés en des endroits choisis du réseau.

Le réseau de positionnement par satellites est de type RNSS (pour « Radio Navigation Satellite System »). Il s'agit par exemple du réseau GPS. Mais, il pourrait s'agir de tout autre type de réseau RNSS, comme par exemple le réseau GLONASS ou le futur réseau GALILEO, ou bien d'une combinaison d'au moins deux des trois réseaux précités. Ce réseau de positionnement par satellites CS peut, comme c'est le cas ici, être couplé à un système d'augmentation, comme par exemple un système SBAS (pour « Satellite Based Augmentation System »), chargé de diffuser à l'aide de satellites géostationnaires SG des trames contenant notamment des données de navigation concernant la constellation CS et générées par au moins une station au sol (non représentée). Mais, tout autre type de système d'augmentation peut être envisagé qu'il soit local ou accessible via le réseau Internet.

Le réseau de communications cellulaire comporte un serveur d'assistance SE qui est ici raccordé à la station de base BTS pour des raisons de simplification. Ce serveur d'assistance SE comporte, ici, un récepteur de navigation R capable de recevoir les signaux GPS de la constellation CS (ou plus généralement les signaux RNSS). Ce récepteur RNSS R peut également être capable de recevoir les signaux du système d'augmentation SBAS.

On considère par ailleurs dans ce qui suit, à titre d'exemple illustratif, que les terminaux mobiles sont des téléphones mobiles UE pouvant communiquer avec le réseau cellulaire, et notamment avec ses stations de base BTS grâce à un émetteur/récepteur ER, et pouvant communiquer avec le réseau de positionnement par satellites CS et le système d'augmentation (SG) grâce à un dispositif de positionnement par satellites DPS par exemple de type GPS, ci-après appelé dispositif DPS.

La configuration de l'installation et son mode de fonctionnement global étant tout à fait classiques, ils ne seront pas décrits plus en détail. L'invention porte en effet plus particulièrement sur le procédé d'acquisition, mis en oeuvre par les terminaux mobiles en coopération avec le serveur d'assistance SE et éventuellement la (ou les) station(s) au sol du système d'augmentation. En d'autres termes, l'invention ne porte ni sur le fonctionnement du système de navigation par satellites CS, ni sur celui d'un système d'augmentation, par exemple de type SBAS, lesquels demeurent inchangés par rapport à ceux de l'art antérieur.

Les messages SBAS contiennent des données destinées à corriger les données de navigation fournies par les satellites de positionnement SN de la constellation CS, afin d'améliorer la qualité (précision, intégrité, continuité et disponibilité) du positionnement déterminé par un dispositif DPS au sein d'un téléphone mobile UE. Plus précisément, ces données SBAS permettent généralement de corriger des erreurs de synchronisation temporelle entre satellites de navigation SN et/ou des erreurs d'éphémérides et/ou des erreurs de propagation. Elles peuvent également contenir des informations relatives à l'intégrité des données de navigation et des corrections ionosphériques.

Le récepteur RNSS R du serveur d'assistance SE est donc ici non seulement chargé de récupérer les données (ou signaux GPS) provenant de la constellation CS, mais également les signaux (ou messages) SBAS émis par le satellite géostationnaire SG du système d'augmentation, afin que ledit serveur d'assistance SE enrichisse les données d'assistance, des messages d'assistance destinés aux terminaux mobiles UE, avec les données qu'ils contiennent.

Les données d'assistances sont enrichies grâce aux données du système SBAS de l'une des manières suivantes :

- Le modèle de navigation (Ephémerides) est modifié de tel sorte qu'il prenne en compte les corrections SBAS ("Fast Corrections" ou corrections rapides, "Long Term corrections" ou corrections sur le long terme, "Ionosphere Corrections" ou corrections caractéristiques de l'Ionosphère, "Clock corrections" ou corrections d'horloge)
- Le serveur diffuse vers le mobile des corrections différentielles locales calculées à partir des données SBAS. Le serveur peut en outre mettre en place une logique de choix entre :

  - des corrections différentielles locales établies grâce à un récepteur de référence lorsque le mobile à qui sont destinées ces corrections se trouve proche du récepteur de référence,
  - des corrections différentielles locales établies grâce aux corrections diffusées par les systèmes SBAS (WAAS, EGNOS, MSAS, etc...) lorsqu'un élément montre que ces corrections apportent plus de précision que celles établies par un récepteur de référence, notamment si le Mobile se trouve loin du récepteur de référence.

Il est également rappelé que les satellites de positionnement SN de la constellation CS possèdent des horloges de cadencement qui sont synchronisées entre elles, de sorte que la constellation CS dispose d'un temps de référence, également appelé temps système (ou ici temps GPS).

Par ailleurs, chaque satellite de positionnement SN est agencé de manière à émettre des spectres étalés (ou « spread spectrum ») sous la forme de signaux en bande L modulés en phase et à accès multiple et référencés par rapport au temps GPS. Par exemple, les signaux sont modulés et codés selon la technique dite W-CDMA. Ce type de modulation étant bien connu de l'homme de l'art, il ne sera pas décrit en détail. Il est simplement rappelé que la porteuse en bande L (ou autre) est modulée par étalement de spectre (BPSK) à l'aide d'un code binaire résultant de la somme (modulo 2) d'un code pseudo-aléatoire (choisi parmi une liste de codes d'étalement orthogonaux entre eux, comme par exemple les codes de Gold (ou « Gold codes »).

Plus précisément, dans le cas d'un système GPS, chaque satellite de positionnement SN émet des signaux dans la bande L1 (1575,42 MHz), modulés par deux codes pseudo-aléatoires, appelés codes C/A (ou « coarse acquisition code ») et codes P (également appelé codes Y lorsqu'ils sont encryptés), ainsi que, généralement, des signaux dans la bande L2 (1277,6 MHz) modulés par un code pseudo-aléatoire Y.

Ces signaux modulés contiennent également des données de navigation, comme par exemple le temps GPS de la constellation CS, leur instant d'émission et les éphémérides du satellite de positionnement SN qui les a émis.

Le but d'un dispositif DPS est donc tout d'abord de se synchroniser sur les signaux qu'il reçoit des satellites de positionnement SN en vue, afin de pouvoir déterminer le temps de propagation de chaque signal reçu, entre le satellite SN concerné et le téléphone mobile UE qu'il équipe, puis les données de navigation contenues dans ces signaux ainsi que les données de navigation complémentaires contenues dans les trames diffusées par le système d'augmentation (SG), et enfin la position dudit téléphone mobile UE.

Pour ce faire, et comme indiqué dans la partie introductive, le dispositif DPS met en oeuvre deux grandes étapes : une étape d'acquisition des codes pseudo-aléatoires, et une étape de détermination de position. L'invention porte principalement sur l'étape d'acquisition.

L'étape de détermination étant inchangée par rapport à celle mise en oeuvre dans les dispositifs DPS de l'art antérieur, seules ses principales sous-étapes seront évoquées plus loin.

Comme cela est mieux illustré sur la figure 2, chaque dispositif DPS comprend une carte CR dédiée à la réception des signaux (en bande L dans le cas d'un système GPS) contenant les informations de navigation, généralement sous forme de données, transmises par la constellation CS, et éventuellement des trames SBAS contenant des données de navigation complémentaires provenant du système d'augmentation (SG), ainsi qu'à l'acquisition des codes pseudo-aléatoires. Cette carte CR est par exemple calée sur les fréquences d'émission L1 et L2 des satellites de positionnement SN. La fréquence d'émission du satellite géostationnaire SG du système d'augmentation est habituellement L1. La carte CR est par ailleurs agencée de manière à recevoir les messages d'assistance provenant du réseau de téléphonie mobile.

La carte CR est donc chargée de mettre en oeuvre l'étape d'acquisition selon l'invention. Pour ce faire, elle comprend tout d'abord un module d'interrogation MI chargé, lorsqu'il l'estime nécessaire d'adresser au serveur d'assistance SE un message lui demandant de transmettre à son téléphone mobile UE des données d'assistance représentatives au moins du temps de référence (ou temps GPS, ou encore temps système) approximatif de la constellation CS (informations de synchronisation de la constellation CS) et de sa position approximative (pré-localisation sous la forme de la position de la cellule dans laquelle il se trouve, ou autre dès lors qu'elle est issue du réseau d'assistance).

Comme on le verra plus loin, ces données d'assistance peuvent également être des données de navigation complémentaires qui seront utilisées lors de l'étape de détermination de position, comme par exemple des numéros de PRN en vue, des éphémérides des satellites, des corrections ionosphériques, des corrections d'horloge, et un modèle numérique de terrain de cellule, par exemple tridimensionnel (3D).

Les messages requérant l'assistance du système d'assistance sont transmis au serveur d'assistance SE par le module d'émission/réception MER de la carte CR du terminal UE, de la même façon que des données de communication classiques. Ils contiennent bien entendu l'identifiant du téléphone mobile UE concerné. Par ailleurs, le dispositif DPS étant ici implanté dans un téléphone mobile UE appartenant à un réseau cellulaire, il est supposé être situé, au moment où il génère sa demande, dans l'une des cellules du réseau. Par conséquent, le module d'interrogation MI peut intégrer dans son message de demande d'assistance (même si ces informations restent habituellement en interne dans le réseau) la position de la cellule (ou son identifiant) dans laquelle son dispositif DPS est situé, et qu'il a obtenu du module de gestion MG du téléphone mobile UE.

Par ailleurs, il est particulièrement avantageux d'asservir l'horloge de cadencement du dispositif DPS du téléphone mobile UE sur l'horloge de cadencement de la station de base BTS qui gère la cellule dans laquelle il est situé. L'horloge de la station de base BTS est en effet beaucoup plus précise que celle du téléphone mobile UE.

Préférentiellement, le serveur d'assistance SE comporte une base de données BD contenant le temps GPS approximatif de la constellation CS et les positions d'un point de référence, par exemple le centre, de chaque cellule du réseau cellulaire. Dans le cas contraire, le serveur d'assistance SE doit interroger son réseau cellulaire pour qu'il lui transmette la position de la cellule concernée. Par ailleurs, lorsque le message de demande d'assistance requiert également des données de navigation complémentaires concernant certains satellites de positionnement, le serveur d'assistance SE écoute, par l'intermédiaire de son récepteur RNSS R, les signaux et messages de navigation issus notamment de la constellation de navigation CS.

Une fois en possession des données d'assistance le serveur d'assistance SE les communique au terminal requérant UE, via le réseau cellulaire.

La carte CR réceptionne ces données d'assistance et les communique à un module de traitement MT qu'elle comprend et qui est chargé de constituer des couples d'hypothèses sur le temps GPS effectif et sa position effective à partir du temps GPS approximatif reçu et de sa position approximative reçue.

Puis, une fois les couples d'hypothèses constitués, le module de traitement MT détermine pour chaque couple d'hypothèses des positions absolues estimatives des satellites SN de la constellation CS.

Il détermine ensuite, toujours pour chaque couple d'hypothèses, les distances estimatives entre le téléphone mobile UE et chacun des satellites de positionnement SN en vue, à partir des positions estimatives de la constellation en vue.

Puis, il détermine, également pour chaque couple d'hypothèses, les effets doppler associés à chacun des satellites de positionnement SN en vue, compte tenu de leurs positions approximatives et des distances qui les séparent du téléphone mobile UE.

Une fois en possession des valeurs estimées des positions, distances et effets doppler pour chaque couple d'hypothèses, le module de traitement MT peut alors déterminer pour chaque couple d'hypothèses une réplique de signal S, correspondant à la somme (ou accumulation) des signaux en bande L qui devraient être reçus, en provenance des satellites SN en vue, pendant l'intervalle temporel choisi, compte tenu du couple d'hypothèses considéré. La relation suivante est un exemple de réplique de signal dans le cas de couples d'hypothèses position/temps:

$$S_{k,n}(t) = \sum_{i=1}^{N_{SAT}} C_i(t - \tau_{i,k,n}) e^{2\pi i f_{i,k,n} t}$$

Le couple d'indices (k,n) représente ici le couple d'hypothèses position géographique / temps, i est l'indice désignant un satellite SN en vue, $N_{SAT}$ est le nombre de satellites SN en vue, $C_i$ désigne le code d'étalement du satellite i, $T_{i,k,n}$ est le retard temporel entre le temps GPS d'émission et le temps de réception reçus du satellite i, et $f_{i,k,n}$ est la fréquence reçue de cadencement de l'horloge du satellite SN en vue d'indice i, corrigée grâce à l'hypothèse de temps constellation / position approximative du terminal UE.

Cette accumulation du signal reçu sur un intervalle de temps choisi est ici rendue possible du fait que les satellites SN de la constellation CS sont synchronisés.

Le module de traitement MT sélectionne ensuite le couple d'hypothèses qui correspond à la réplique de signal qui présente une corrélation maximale avec le signal reçu (ou accumulé) pendant l'intervalle de temps.

Pour ce faire, il détermine préférentiellement, pour chaque réplique de signal, et donc pour chaque couple d'hypothèses, une fonction représentative de son énergie de corrélation avec la somme des signaux effectivement reçus sur l'intervalle choisi. On tire ainsi partie avantageusement de l'accumulation des signaux sur l'intervalle de temps choisi. L'estimation d'une fonction de corrélation est en effet grandement facilitée lorsque le signal est peu bruité.

Puis, le module de traitement MT retient la réplique de signal qui présente l'énergie (de corrélation) la plus forte.

Cette réplique de signal retenue correspond à un couple d'hypothèses qui est donc sélectionné. En d'autres termes, à la fin de ce traitement le module de traitement MT dispose des temps GPS et position du téléphone mobile UE qui sont les plus probables. Il peut donc se synchroniser sur chaque signal reçu d'un satellite SN en vue afin de déterminer les codes pseudo-aléatoires utilisés pour le moduler.

Une fois les codes pseudo-aléatoires déterminés, et donc une fois la synchronisation sur les codes pseudo-aléatoires effectuée, le module de traitement MT doit estimer finement les synchronisations, puis éventuellement démoduler.

Il est cependant préférable d'envisager un traitement additionnel préalable à la démodulation. En effet, le système d'augmentation de type SBAS et le réseau de positionnement par satellites de type GPS utilisent une technique d'étalement de spectre reposant sur des séquences périodiques de codes d'étalement, comme par exemple les codes de Gold. Or, la durée de ces séquences est en général vingt fois plus courte que la durée accordée à un bit d'information du signal. Par conséquent, la phase de synchronisation sur les codes pseudo-aléatoires doit être préférentiellement suivie d'une étape de synchronisation de bits.

La synchronisation de bits peut consister, par exemple, à « désétaler » (ou « despreading ») le signal à la cadence de la séquence de codes, c'est-à-dire 1 KHz, après avoir effectué la synchronisation de codes pseudo-aléatoires. On procède ensuite à une détection de fréquence en appliquant une transformée de Fourier rapide (ou FFT) au signal désétalé. Cela permet en effet d'estimer l'effet doppler résiduel avec une incertitude inférieure à environ 25 Hz. Pour ce faire, on peut par exemple effectuer une FFT sur 1024 échantillons, correspondant à environ une seconde (1 s). Puis, on procède à la correction de la fréquence détectée. Enfin, en utilisant un opérateur spécifique, on détermine la transition de bit en considérant que la séquence de codes est synchronisée sur le bit et que chaque bit est constitué de vingt (20) codes pseudo-alétaoires complets, ce qui correspond à 20 x 1 ms.

L'opérateur spécifique utilisé peut être par exemple du type suivant :

$$S(n) = \sum_{i=1}^{Nbit} \left| \sum_{k=1}^{20} S_{k+20 \cdot i+n} - \sum_{k=1}^{20} S_{k+20 \cdot (i-1)+n} \right|^2$$

où S représente un échantillon de signal désétalé à 1 KHz.

Par exemple, le signal S est calculé sur un nombre de bits (Nbit) égal à cinquante (50) pour une durée de signal d'une seconde.

Le maximum de S(n), lorsque n varie entre 0 et 19, donne la transition de bit.

Ce type de synchronisation de bits est particulièrement avantageux car il est peu consommateur de temps de calcul. De plus, il permet de décorréler les différents problèmes d'estimation introduits par le traitement des signaux GPS.

Une fois la synchronisation de bits effectuée, l'étape de détermination de la position peut commencer.

Le dispositif DPS comporte à cet effet un premier module de calcul MC1 chargé de déterminer pour chaque signal démodulé son temps de propagation entre le satellite SN en vue, qui l'a émis, et le téléphone mobile UE (ou plus précisément son dispositif DPS). Pour ce faire, il utilise la date d'émission du signal, intégrée dans ledit signal par le satellite qui l'a émis, et la date de réception associée au signal par le module d'émission/réception MER du dispositif DPS lors de sa réception.

Ces temps de propagation alimentent un deuxième module de calcul MC2 chargé de déterminer, à partir, d'une part, des données de navigation contenues dans chaque signal et des données de navigation complémentaires contenues dans les messages SBAS traditionnels et/ou d'assistance reçus du système d'assistance (serveur SE), et d'autre part, du temps de propagation associé, la pseudo-distance entre le téléphone mobile UE et le satellite SN en vue, correspondant.

Les données d'assistance, qui peuvent remplacer ou compléter les données extraites des messages (ou signaux) provenant des satellites SN et qui peuvent être transmises à un dispositif DPS par le système d'assistance (serveur d'assistance SE), sont par exemple les éphémérides des satellites de positionnement SN en vue du téléphone mobile UE concerné, et/ou des corrections temporelles des satellites de positionnement SN en vue du téléphone mobile UE concerné, représentatives de l'écart temporel entre le temps GPS et l'horloge de cadencement du dispositif DPS du téléphone mobile UE concerné, et/ou des secondes corrections temporelles représentatives des perturbations induites par l'ionosphère sur la propagation des signaux transmis par les satellites de positionnement SN en vue du téléphone mobile UE concerné, et/ou des données représentatives d'un modèle tridimensionnel (3D) de la cellule dans laquelle le terminal requérant est situé.

Ces données de navigation complémentaires, et notamment les données de correction, sont utilisées par le deuxième module de calcul MC2 pour corriger les données de navigation transmises dans les signaux en bande L par les satellites SN en vue. Elles permettent d'améliorer la sensibilité des traitements et par conséquent d'améliorer la précision des calculs.

Mais certaines de ces données de navigation, comme par exemple les données du modèle 3D, peuvent également servir dans la phase suivante de détermination de la position.

Les pseudo-distances associées à chaque satellite SN en vue, déterminées par le deuxième module de calcul MC2, alimentent un troisième module de calcul MC3 chargé de déterminer la position du téléphone mobile UE. Plus précisément, le troisième module de calcul MC3 détermine la position au moins par une quadrilatération, et plus généralement par une résolution numérique de type méthode des moindres carrés à quatre inconnues et au moins quatre mesures, à partir des pseudo-distances (en général au nombre de quatre (4)), de certaines données de navigation corrigées et/ou de certaines données d'assistance, comme par exemple les données du modèle 3D de la cellule dans laquelle son téléphone mobile UE est situé.

Ce modèle 3D peut être particulièrement utile lorsque le troisième module de calcul MC3 ne dispose que de trois pseudo-distances pour déterminer la position du téléphone mobile UE. Ce cas peut notamment arriver dans les environnements difficiles où le téléphone mobile UE ne voit que trois satellites SN.

La sortie du troisième module de calcul MC3 alimente en positions le module de gestion MG du téléphone mobile UE.

Le dispositif DPS selon l'invention, et notamment ses module d'interrogation MI, module de traitement MT, modules de calcul MC1, MC2 et MC3, peuvent être réalisés sous la forme de circuits électroniques, de modules logiciels (ou informatiques), ou d'une combinaison de circuits et de logiciels.

Il est important de noter que le modèle 3D d'une cellule d'un réseau cellulaire (qui peut être transmis par le système d'assistance (serveur d'assistance SE) à un terminal mobile UE sous la forme de données de navigation complémentaires) peut être élaboré à partir des calculs de position effectués par les différents terminaux mobiles UE appartenant audit réseau cellulaire.

On peut en effet envisager que chaque dispositif DPS soit agencé de manière à transmettre au serveur d'assistance SE du système d'assistance, les pseudo-distances déterminées par son deuxième module de calcul MC2 (dans un mode de fonctionnement de type « MS-assisted »), ou bien les positions déterminées par son troisième module de calcul MC3 (dans un mode de fonctionnement de type « MS-based »), accompagnées de l'identifiant de la cellule dans laquelle il est implanté.

Le serveur d'assistance SE comprend alors un module de traitement PM chargé, lorsqu'il reçoit des données d'information représentatives de la position d'un terminal mobile UE (pseudo-distances ou positions), de les stocker dans sa base de données BD en correspondance de l'identifiant de la cellule du réseau cellulaire dans laquelle ce terminal mobile UE est situé.

Dans ce cas, le module de traitement PM est préférentiellement agencé de manière à déterminer des données auxiliaires représentatives de la qualité des données d'information reçues, puis à les mémoriser en correspondance de l'identifiant de cellule. On entend ici par « qualité » un paramètre physique tel que par exemple l'intensité ou le niveau du signal GSM reçu. Ces données auxiliaires peuvent notamment être utiles à l'opérateur du réseau de téléphonie mobile.

Il est également particulièrement avantageux que le module de traitement PM soit agencé de manière à élaborer progressivement un modèle tridimensionnel (3D) du réseau cellulaire à partir des identifiants de cellule et des données d'information et/ou données auxiliaires correspondantes. Plus précisément, le module de traitement PM peut déterminer la zone couverte par chaque cellule du réseau puisqu'il dispose des positions où les téléphones mobiles UE sont en mesure de communiquer. Bien entendu, le modèle 3D du réseau est stocké dans la base de données BD du serveur d'assistance SE. Il peut être mis à jour continuellement, ou de façon périodique, ou encore sur ordre, selon les besoins.

Comme indiqué précédemment, une portion de ce modèle 3D du réseau, représentant une cellule, peut ensuite être transmise au terminal mobile UE qui le requiert, sous la forme de données de navigation complémentaires.

Grâce à ces informations sur le réseau, obtenues de façon passive, sans qu'il faille effectuer des campagnes de mesures, l'opérateur du réseau dispose d'informations précieuses en trois dimensions (3D) qui lui permettent d'améliorer la couverture géographique de son réseau ou de procéder à une intervention de maintenance ou de réparation. On peut, en effet, ainsi déterminer les zones d'ombre, ou les zones dans lesquelles s'est produit un problème technique (zones d'ombres du système RNSS ou zones d'ombres du réseau de communications mobile). Cela peut également permettre de déterminer les zones d'ombres du système d'augmentation.

On peut également envisager une élaboration du modèle 3D du réseau cellulaire à la requête de son opérateur. Dans ce cas, on transmet aux dispositifs DPS, de préférence via le système d'assistance (SE), un message requérant de leur part la transmission des pseudo-distances ou positions qu'ils déterminent, pendant une durée choisie.

Dans une variante, on peut envisager que ce ne soit pas le serveur d'assistance SE qui détermine le modèle 3D du réseau cellulaire. Il est en effet possible de configurer les téléphones mobiles afin qu'ils transmettent au réseau cellulaire (et non au serveur d'assistance SE) les données d'informations représentatives des pseudo-distances ou positions calculées par leur dispositif DPS. Dans ce cas, le modèle 3D du réseau est transmis au système d'assistance SE par le réseau cellulaire afin d'être stocké dans sa base de données BD puis d'être transmis sous la forme de données de navigation complémentaires aux dispositifs DPS.

Le dispositif DPS selon l'invention peut être également agencé de manière à tenir compte de la dynamique du terminal mobile UE dans lequel il est implanté.

En effet, la synchronisation sur le signal reçu d'un satellite SN porte non seulement sur le délai entre le signal reçu (et plus précisément l'étalement de codes) et la réplique élaborée au niveau du dispositif DPS, mais également sur l'écart fréquentiel entre la fréquence du dispositif DPS et la fréquence du signal reçu.

Notamment, l'incertitude fréquentielle est induite par l'incertitude relative à l'oscillateur local, l'effet doppler dû au mouvement du satellite et l'effet doppler dû au mouvement du terminal mobile UE.

On peut montrer que la durée de l'intervalle temporel alloué à la détection du maximum de corrélation influe directement sur les performances. Plus cette durée (appelée « durée d'intégration cohérente ») est longue, meilleure est la réjection de bruit. Par conséquent, le rapport signal sur bruit après corrélation est inversement proportionnel à la durée d'intégration cohérente. En d'autres termes, l'amélioration de la sensibilité du dispositif DPS passe par l'augmentation de cette durée d'intégration cohérente.

Par ailleurs, le pas de discrétisation (δf) du domaine fréquentiel est d'autant plus petit que la durée d'intégration cohérente (Ti) est grande (on a typiquement la relation δf = 1/2Ti). Cela permet de minimiser les pertes pendant l'intégration cohérente.

Il découle de ces remarques que lorsqu'une hypothèse de fréquence ou une hypothèse de position géographique est testée, le dispositif DPS est d'autant plus sensible à un changement de fréquence, pendant la phase d'intégration, que le pas de discrétisation est petit. Or, la dynamique d'un terminal mobile UE est de nature à faire varier la phase du signal reçu et donc à induire des changements de fréquence. Par conséquent, l'amélioration de la sensibilité d'un dispositif DPS passe par la prise en compte de la dynamique du terminal mobile UE dans lequel il est implanté.

Ce phénomène est d'autant plus gênant que les conditions de réception sont mauvaises.

Pour tenter de remédier à cela, il a été proposé de limiter la durée d'intégration cohérente afin que le pas de discrétisation ne soit pas trop petit. Typiquement, on limite la largeur du pas de discrétisation à environ 500 Hz, ce qui correspond à une durée d'intégration cohérente de l'ordre de 1 ms. Ainsi, en effectuant une accumulation cohérente d'énergie du type de celle précédemment décrite, pendant une durée de 20 ms reposant sur vingt durées d'intégration cohérente de 1 ms chacune, la perte est d'environ 6,5 dB par rapport à une unique durée d'intégration cohérente de 20 ms.

Un autre aspect de l'invention a donc pour objet d'améliorer la situation en estimant directement la dynamique du terminal mobile UE pendant l'intégration plutôt que de limiter artificiellement la durée d'intégration cohérente.

L'invention propose à cet effet d'implanter dans le terminal mobile UE, et de préférence dans son dispositif de positionnement par satellites DPS, un dispositif de mesure DM chargé de mesurer son mouvement, sa vitesse et son accélération pendant la durée d'intégration cohérente.

Ce dispositif de mesure DM est plus préférentiellement agencé sous la forme d'un micro-système électromécanique (ou MEMS pour « Micro Electro Mechanical System ») à micro inertie. Tout type de MEMS à micro inertie peut être envisagé et notamment ceux utilisant un cantilever, ou une ou plusieurs lames suspendues, ou encore une structure en forme de H partiellement suspendue.

A partir des mesures délivrées par le dispositif de mesure DM et des données d'assistance précitées, et notamment les positions de satellites et la pré-localisation du terminal mobile UE, le module de traitement MT du dispositif DPS peut estimer la vitesse, l'accélération $\gamma$ et la variation d'accélération d$\gamma$/dt (ou « jerk ») par rapport à chaque satellite SN en vue, et en déduire la phase induite devant être prise en compte dans le calcul de la réplique de signal lors de l'intégration cohérente (accumulation).

La réplique du signal peut alors être déterminée à l'aide d'une relation dérivée de la relation suivante qui correspond au cas de couples d'hypothèses de la grille balayée (position/temps système) :

$$S = \int_{0}^{Ti} S_r(t) r(t-\tau) e^{2\pi j (w_0 t + \frac{1}{2} w_0 \frac{\gamma}{c} t^2 + \frac{1}{3} w_0 \frac{d\gamma}{dt} t^3)}$$

où $w_0$ est le pas de discrétisation fréquentiel testé.

De la sorte, le temps d'intégration cohérente peut être augmenté et l'on peut exploiter un signal de pilotage (ou « pilot tone ») y compris durant la phase d'acquisition. Le pilot tone est un signal sans données, comme par exemple une modulation de phase à porteuse pure étalée. En outre, les mesures délivrées par le dispositif de mesure DM portent sur des paramètres qui varient très rapidement dans le temps et sont donc particulièrement bien adaptés aux courtes durées d'intégration.

L'invention offre également un procédé dédié à la détermination de la position d'un terminal mobile UE et comprenant comme le procédé de l'art antérieur une étape d'acquisition de codes pseudo-aléatoires, suivie d'une étape de détermination de la position du terminal mobile UE à partir des codes pseudo-aléatoires acquis et des données de navigation contenues dans les signaux reçus (lus dans les signaux de navigation reçus ou dans les messages d'assistance).

Celui-ci peut être notamment mis en oeuvre à l'aide de l'installation et des terminaux mobiles UE présentés ci-avant. Les fonctions et sous-fonctions principales et optionnelles assurées par les étapes de ce procédé étant sensiblement identiques à celles assurées par les différents moyens constituant l'installation et les terminaux mobiles UE, seules seront résumées ci-après les étapes mettant en oeuvre les fonctions principales du procédé selon l'invention.

Ce procédé consiste :

- à transmettre au terminal mobile UE, de préférence à sa demande, des données d'assistance représentatives du temps de référence (temps GPS) approximatif de la constellation CS et de sa position approximative, ainsi qu'éventuellement des éphémérides, des corrections ionosphériques, et analogues,

- puis, à déterminer des positions estimatives de la constellation CS, des distances estimatives entre le terminal mobile UE et chacun des satellites SN en vue, et des effets doppler associés, en fonction de couples d'hypothèses portant sur le temps de référence approximatif et la position approximative reçus,

- puis, à déterminer pour chaque couple d'hypothèses une réplique de signal correspondant aux positions et distances estimatives et aux effets doppler associés sur un intervalle de temps choisi, et

- à sélectionner le couple d'hypothèses qui correspond à la réplique de signal qui présente une corrélation maximale avec le signal reçu pendant l'intervalle de temps choisi, afin de déterminer les codes pseudo-aléatoires qui modulent chacun des signaux reçus.

L'invention ne se limite pas aux modes de réalisation de terminal mobile, de serveur d'assistance et de procédé décrits ci-avant, seulement à titre d'exemple, mais elle englobe toutes les variantes que pourra envisager l'homme de l'art dans le cadre des revendications ci-après.

Ainsi, dans ce qui précède il a été décrit une installation dans laquelle le réseau de télécommunications est un réseau cellulaire de type GSM/GPRS ou UMTS. Mais l'invention concerne également les réseaux radio de télécommunications de type satellitaire hybride avec répéteurs terrestres.

Une autre implémentation visant à l'enrichissement des données d'assistance par envoi d'informations tri-dimensionnelles de la cellule où se trouve le mobile consiste à :

- ce que le serveur de données d'assistance diffuse au mobile une densité de probabilité de masquage des signaux provenant de la constellation de satellites de navigation fonction de l'élévation & azimuth du point de vue du mobile,
- Ce que le mobile se serve des ces informations pour
- soit initier sa recherche de satellite en commençant par les satellites qui ont la probabilité d'être bloqués la plus basse possible
- soit pour améliorer un algorithme de multi-trajet en déduisant une probabilité de réflexion par observation de la densité probabilité de blocage.

L'avantage de ce type d'implémentation réside dans une économie de la quantité de données transmises du serveur vers le mobile.

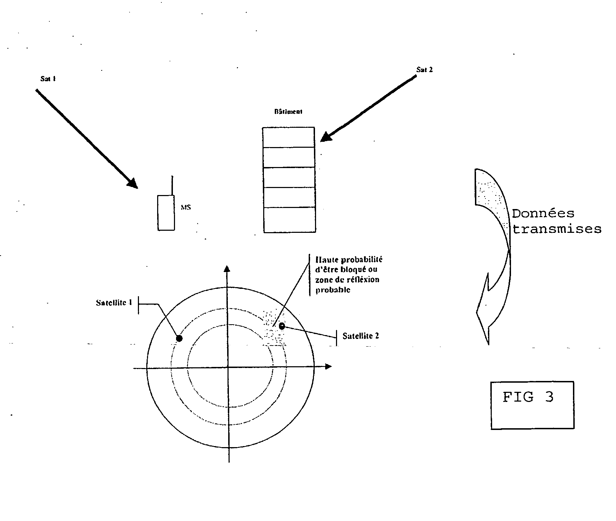

La figure 3 donne une illustration de la méthode. Le MS se trouve au centre la cellule. Un immeuble mlasque une partie de la visibilité selon un masque d'elevation azimuth. Ce masquage est transmis vers le MS parmi des données d'assistances sous la forme d'une densité de probabilité de masquage dans une direction donnée.

## Revendications

1. Procédé de détermination de la position d'un terminal mobile (UE), comprenant une étape d'acquisition par ledit terminal (UE) de codes pseudo-aléatoires, modulant des signaux reçus de satellites (SN) en vue appartenant à une constellation (CS) de satellites de positionnement et rapportés à un temps de référence, par comparaison à des répliques de signaux résultant d'hypothèses, et une étape de détermination de la position dudit terminal (UE) à partir desdits codes acquis et de données de navigation contenues dans lesdits signaux, **caractérisé en ce qu'**à l'étape d'acquisition i) on transmet audit terminal (UE) des données d'assistance représentatives d'un temps de référence approximatif et de sa position approximative, ii) on détermine des positions estimatives de ladite constellation (CS) de satellites (SN), des distances estimatives entre ledit terminal (UE) et chacun desdits satellites (SN) en vue, et des effets doppler associés, en fonction de couples d'hypothèses portant sur ledit temps de référence approximatif et ladite position approximative, iii) on détermine pour chaque couple d'hypothèses portant sur le temps de référence approximatif et la position approximative reçus, une réplique composite de signal correspondant auxdites positions et distances estimatives et auxdits effets doppler associés, sur un intervalle de temps choisi, réplique composite issue de la somme de répliques des signaux de satellites en vue et iv) on sélectionne le couple d'hypothèses correspondant à la réplique de signal présentant une corrélation maximale avec le signal reçu pendant ledit intervalle de temps, de manière à déterminer lesdits codes pseudo-aléatoires modulant lesdits signaux reçus.

2. Procédé selon la revendication 1, **caractérisé en ce que** lesdites données d'assistance proviennent d'un serveur d'assistance (SE) raccordé à un réseau de communications cellulaire dont dépend ledit terminal (UE).

3. Procédé selon la revendication 2, **caractérisé en ce que** lesdites données d'assistance sont transmises audit terminal (UE) via ledit réseau de communications cellulaire.

4. Procédé selon l'une des revendications 2 et 3, **caractérisé en ce que**, ladite position approximative est représentative de la cellule dans laquelle ledit terminal (UE) est situé lorsqu'il requiert lesdites données d'assistance.

5. Procédé selon la revendication 4, **caractérisé en ce que** l'on asservit l'horloge de cadencement d'acquisition dudit terminal (UE) sur l'horloge de cadencement de la station de base (BTS) gérant la cellule dans laquelle il est situé.

**6.** Procédé selon l'une des revendications 1 à 5, **caractérisé en ce que** ladite sélection d'une réplique de signal consiste à déterminer pour chaque réplique de signal une fonction représentative de son énergie de corrélation avec ledit signal reçu pendant l'intervalle de temps, puis à retenir la réplique de signal dont l'énergie est la plus forte.

**7.** Procédé selon l'une des revendications 1 à 6, **caractérisé en ce que** lesdites données d'assistance comprennent des données de navigation complémentaires choisies dans un groupe comprenant au moins des éphémérides des satellites (SN) en vue, des premières corrections temporelles desdits satellites en vue, représentatives de l'écart temporel entre ledit temps de référence et leur horloge de cadencement, et des secondes corrections temporelles représentatives des perturbations induites par l'ionosphère sur la propagation des signaux transmis par lesdits satellites (SN) en vue.

**8.** Procédé selon l'une des revendications 1 à 7, **caractérisé en ce que** lesdites données d'assistance comprennent des données de navigation complémentaires provenant d'un système d'augmentation (SG) couplé au système de navigation par satellites (CS).

**9.** Procédé selon l'une des revendications 1 à 8, **caractérisé en ce que** lesdites données d'assistance comprennent des données représentatives d'un modèle tridimensionnel de la cellule dans laquelle ledit terminal requérant (UE) est situé.

**10.** Procédé selon l'une des revendications 1 à 9, **caractérisé en ce que** l'on stocke des données d'information représentatives de la position du terminal (UE), de manière à mémoriser ladite position en correspondance d'un identifiant de la cellule dans laquelle il est situé.

**11.** Procédé selon la revendication 10, **caractérisé en ce que** l'on mémorise en outre ladite position en correspondance de données auxiliaires représentatives de la qualité desdites données d'information transmises.

**12.** Procédé selon la combinaison de la revendication 4 avec l'une des revendications 10 et 11, **caractérisé en ce que** l'on génère un modèle tridimensionnel dudit réseau de communications à partir desdits identifiants de cellules et desdites données d'information et/ou données auxiliaires correspondantes, puis on mémorise ledit modèle tridimensionnel du réseau de communications.

**13.** Procédé selon la combinaison des revendications 9 et 12, **caractérisé en ce que** ledit modèle tridimensionnel de cellule transmis audit terminal (UE) est une portion du modèle tridimensionnel du réseau de communications.

**14.** Procédé selon l'une des revendications 1 à 13, **caractérisé en ce que** l'on effectue des mesures représentatives de la dynamique dudit terminal mobile (UE), et **en ce que** l'on estime à partir desdites mesures et desdites données d'assistance une vitesse, une accélération et une variation d'accélération par rapport à chaque satellite (SN) en vue, puis on déduit de celles-ci une phase induite, et on détermine ladite réplique de signal compte tenu de ladite phase induite.

**15.** Terminal mobile (UE), comprenant des moyens (CR) d'acquisition de codes pseudo-aléatoires, modulant des signaux reçus de satellites (SN) en vue appartenant à une constellation (CS) de satellites de positionnement et rapportés à un temps de référence, par comparaison à des répliques de signaux résultant d'hypothèses, et des moyens de calcul (MC1-MC3) propres à déterminer la position dudit terminal (UE) à partir desdits codes acquis et de données de navigation contenues dans lesdits signaux reçus, **caractérisé en ce que** lesdits moyens d'acquisition (CR) sont agencés, à réception de données d'assistance représentatives d'un temps de référence approximatif et de la position approximative dudit terminal (UE), pour déterminer des positions estimatives de ladite constellation de satellites (SN), des distances estimatives entre ledit terminal (UE) et chacun desdits satellites (SN) en vue, et des effets doppler associés, en fonction de couples d'hypothèses portant sur ledit temps de référence approximatif et ladite position approximative, puis pour déterminer pour chaque couple d'hypothèses une réplique composite de signal correspondant auxdites positions et distances estimatives et auxdits effets doppler associés, sur un intervalle de temps choisi, réplique composite issue de la somme de répliques des signaux de satellites en vue, et pour sélectionner le couple d'hypothèses correspondant à la réplique de signal présentant une corrélation maximale avec le signal reçu pendant ledit intervalle de temps, de manière à déterminer lesdits codes pseudo-aléatoires modulant lesdits signaux reçus.

**16.** Terminal selon la revendication 15, **caractérisé en ce qu'**il est agencé pour communiquer au sein d'un réseau de communications cellulaire dont chaque cellule est gérée par une station de base (BTS), et en ce que ladite position approximative est représentative de la cellule dans laquelle il est situé lorsqu'il requiert lesdites données d'assistance.

**17.** Terminal selon la revendication 16, **caractérisé en ce que** lesdits moyens d'acquisition (CR) comprennent une horloge de cadencement asservie sur l'horloge de cadencement de la station de base (BTS) gérant la cellule dans laquelle il est situé.

**18.** Terminal selon l'une des revendications 15 à 17, **caractérisé en ce que** lesdits moyens d'acquisition (CR) sont agencés pour sélectionner une réplique de signal en procédant à une détermination pour chaque réplique de signal d'une fonction représentative de son énergie de corrélation avec ledit signal reçu pendant l'intervalle de temps, puis en retenant la réplique de signal présentant l'énergie la plus forte.

**19.** Terminal selon l'une des revendications 15 à 18, **caractérisé en ce que** lesdites données d'assistance comprennent des données de navigation complémentaires choisies dans un groupe comprenant au moins des éphémérides des satellites (SN) en vue, des premières corrections temporelles desdits satellites (SN) en vue, représentatives de l'écart temporel entre ledit temps de référence et leur horloge de cadencement, et des secondes corrections temporelles représentatives des perturbations induites par l'ionosphère sur la propagation des signaux transmis par lesdits satellites (SN) en vue.

**20.** Terminal selon l'une des revendications 15 à 19, **caractérisé en ce que** lesdites données d'assistance comprennent des données représentatives d'un modèle tridimensionnel de la cellule dans laquelle ledit terminal requérant (UE) est situé.

**21.** Terminal selon la revendication 20, **caractérisé en ce qu'**il est agencé pour déterminer ladite position à l'aide desdites données représentatives d'un modèle tridimensionnel de cellule reçu.

**22.** Terminal selon l'une des revendications 15 à 21, **caractérisé en ce que** lesdites données d'assistance comprennent des données de navigation complémentaires provenant d'un système d'augmentation (SG) couplé audit système de navigation par satellites (CS).

**23.** Terminal selon l'une des revendications 18 à 22, **caractérisé en ce qu'**il est agencé pour transmettre à un serveur d'assistance (SE) dudit réseau de communications cellulaire des données d'information représentatives de sa position, de sorte que lesdites données d'information puissent être stockées dans une base de données (BD) en correspondance d'un identifiant de la cellule dans laquelle il est situé.

**24.** Terminal selon l'une des revendications 15 à 23, **caractérisé en ce qu'**il comprend un dispositif de mesure à micro inertie (DM) propre à délivrer des mesures représentatives de la dynamique dudit terminal, et en ce que lesdits moyens d'acquisition (CR) sont agencés pour estimer à partir desdites mesures et desdites données d'assistance une vitesse, une accélération et une variation d'accélération par rapport à chaque satellite (SN) en vue, et déduire de celles-ci une phase induite, puis pour déterminer ladite réplique de signal compte tenu de ladite phase induite.

**25.** Terminal selon la revendication 24, **caractérisé en ce que** ledit dispositif de mesure (DM) est agencé sous la forme d'un micro système électromécanique à micro inertie.

**26.** Serveur d'assistance (SE) pour un réseau de communications cellulaire communiquant avec des terminaux mobiles (UE), **caractérisé en ce qu'**il est agencé pour transmettre des données d'assistance, via ledit réseau de communications, à des terminaux mobiles (UE) selon l'une des revendications 15 à 25, consécutivement à la réception de requêtes émanant de ceux-ci.

**27.** Serveur selon la revendication 26, **caractérisé en ce qu'**il est agencé pour transmettre à chaque terminal requérant (UE) des données d'assistance comprenant des données de navigation complémentaires choisies dans un groupe comprenant au moins des éphémérides des satellites (SN) en vue, des premières corrections temporelles desdits satellites (SN) en vue dudit terminal (UE), représentatives de l'écart temporel entre ledit temps de référence et l'horloge de cadencement de ce terminal (UE), des secondes corrections temporelles représentatives des perturbations induites par l'ionosphère sur la propagation des signaux transmis par lesdits satellites (SN) en vue dudit terminal et des données représentatives d'un modèle tridimensionnel de la cellule dans laquelle ledit terminal requérant (UE) est situé.

**28.** Serveur selon l'une des revendications 26 et 27, **caractérisé en ce qu'**il comprend des moyens de réception (R) propres à recevoir des messages d'un système de navigation par satellites (CS), et en ce qu'il est agencé pour transmettre à chaque terminal requérant (UE) des données d'assistance comprenant des données de navigation extraites des messages provenant dudit système de navigation par satellites (CS).

**29.** Serveur selon la revendication 28, **caractérisé en ce que** lesdits moyens de réception (R) sont propres à recevoir des messages d'un système d'augmentation, couplé audit système de navigation par satellites (CS), et **en ce qu'**il est agencé pour transmettre à chaque terminal requérant (UE) des données d'assistance comprenant des données de navigation complémentaires extraites des messages provenant dudit système d'augmentation et représentatives dudit système de navigation par satellites (CS).

30. Serveur selon l'une des revendications 26 à 29, **caractérisé en ce qu'**il comprend des moyens de traitement (PM) agencés, à réception de données d'information représentatives de la position d'un terminal (UE), pour stocker dans une base de données (BD) lesdites données d'information en correspondance d'un identifiant de la cellule, d'un réseau de communications cellulaire, dans laquelle ledit terminal (UE) est situé.

31. Serveur selon la revendication 30, **caractérisé en ce que** lesdits moyens de traitement (PM) sont agencés pour déterminer des données auxiliaires représentatives de la qualité desdites données d'information reçues, et pour mémoriser ces données auxiliaires dans ladite base de données (BD) en correspondance dudit identifiant de cellule et desdites données d'information représentatives de la position du terminal (UE).

32. Serveur selon l'une des revendications 30 et 31, **caractérisé en ce que** lesdits moyens de traitement (PM) sont agencés pour générer un modèle tridimensionnel dudit réseau de communications à partir desdits identifiants de cellules et desdites données d'information et/ou données auxiliaires correspondantes, puis pour mémoriser ledit modèle tridimensionnel du réseau de communications dans ladite base de données (BD).

33. Serveur selon la combinaison des revendications 26 et 32, **caractérisé en ce que** lesdits moyens de traitement (PM) sont agencés pour extraire de ladite base de données (BD) une portion dudit modèle tridimensionnel du réseau de communications, représentative dudit modèle tridimensionnel de la cellule dans laquelle est situé ledit terminal requérant (UE), de manière à lui transmettre.

34. Serveur selon l'une des revendications 26 à 32, **caractérisé en ce que** lesdits moyens de traitement (PM) sont agencés pour extraire d'une base de données (BD), stockant des portions d'un modèle tridimensionnel dudit réseau de communications en correspondance d'identifiants de cellules, la portion de modèle stockée en correspondance de l'identifiant de la cellule dans laquelle un terminal requérant (UE) est situé, de manière à lui transmettre ladite portion extraite.

35. Utilisation des procédé, terminal mobile (UE) et serveur d'assistance (SE) selon l'une des revendications précédentes, pour des signaux en bande L modulés en phase et à accès multiple.

36. Utilisation selon la revendication 35, **caractérisée en ce que** ladite modulation en phase et à accès multiple s'effectue selon la technique dite W-CDMA.

37. Utilisation des procédé, terminal mobile (UE) et serveur d'assistance (SE) selon l'une des revendications 1 à 34 dans des réseaux de positionnement par satellites (SN) de type RNSS.

38. Utilisation selon la revendication 37, **caractérisée en ce que** ledit réseau de positionnement par satellites (SN) est de type GPS.

**Claims**

1. Method of determining the position of a mobile terminal (UE), including a step of said terminal (UE) acquiring pseudo-random codes modulating signals received from satellites (SN) in view belonging to a constellation (CS) of positioning satellites and related to a reference time by comparison with signal replicas resulting from hypotheses, and a step of determining the position of said terminal (UE) from said acquired codes and from navigation data contained in said signals, which method is **characterised in that**, in the acquisition step, i) assistance data is transmitted to said terminal (UE) representing an approximate reference time and its approximate position, ii) estimated positions of said constellation (CS) of satellites (SN), estimated distances between said terminal (UE) and each of said satellites (SN) in view and associated Doppler effects are determined as a function of pairs of hypotheses relating to said approximate reference time and said approximate position, iii) a composite signal replica is determined for each pair of hypotheses relating to the approximate reference time and the approximate position received corresponding to said estimated positions and distances and to said associated Doppler effects over a selected time interval, which composite replica originates from the sum of replica signals of satellites in view and iv) the pair of hypotheses corresponding to the signal replica having a maximum correlation with the signal received during said time interval is selected in order to determine said pseudo-random codes modulating said received signals.

2. Method according to claim 1, **characterised in that** said assistance data comes from an assistance server (SE) connected to a cellular communication network on which said terminal (UE) is dependent.

3. Method according to claim 2, **characterised in that** said assistance data is transmitted to said terminal (UE) via said cellular communication network.

**4.** Method according to either claim 2 or claim 3, **characterised in that** said approximate position represents the cell in which said terminal (UE) is situated when it requests said assistance data.

**5.** Method according to claim 4, **characterised in that** the acquisition timing clock of said terminal (UE) is slaved to the timing clock of the base station (BTS) managing the cell in which it is situated.

**6.** Method according to any one of claims 1 to 5, **characterised in that** selecting a signal replica consists in determining for each signal replica a function representing its energy of correlation with said received signal during the time interval and then retaining the signal replica whose energy is the highest.

**7.** Method according to any one of claims 1 to 6, **characterised in that** said assistance data comprises complementary navigation data selected in a group comprising at least ephemerides of the satellites (SN) in view, first time corrections of said satellites in view representing the time difference between said reference time and their timing clock, and second time corrections representing disturbances induced by the ionosphere to the propagation of the signals transmitted by said satellites (SN) in view.

**8.** Method according to any one of claims 1 to 7, **characterised in that** said assistance data comprises complementary navigation data coming from an augmentation system (SG) connected to the satellite navigation system (CS).

**9.** Method according to any one of claims 1 to 8, **characterised in that** said assistance data comprises data representing a three-dimensional model of the cell in which said requesting terminal (UE) is situated.

**10.** Method according to any one of claims 1 to 9, **characterised in that** information data representing the position of the terminal (UE) is stored in corresponding relationship to an identifier of the cell in which it is situated.

**11.** Method according to claim 10, **characterised in that** said position is also stored in corresponding relationship to auxiliary data representing the quality of said information data transmitted.

**12.** Method according to claim 4 in combination with either claim 10 or claim 11, **characterised in that** a three-dimensional model of said communication network is generated from said cell identifiers and said information data and/or corresponding auxiliary data, after which said three-dimensional model of the communication network is stored.

**13.** Method according to claim 9 in combination with claim 12, **characterised in that** said three-dimensional cell model transmitted to said terminal (UE) is a portion of the three-dimensional model of the communication network.

**14.** Method according to any one of claims 1 to 13, **characterised in that** measurements are effected representing the dynamics of said mobile terminal (UE), a speed, an acceleration and a variation of acceleration relative to each satellite (SN) in view are estimated from said measurements and from said assistance data, after which an induced phase is deduced therefrom, and said signal replica is determined taking account of said induced phase.

**15.** Mobile terminal (UE) comprising means (CR) for acquiring pseudo-random codes modulating signals received from satellites (SN) in view belonging to a constellation (CS) of positioning satellites and related to a reference time by comparison with signal replicas resulting from hypotheses, and computation means (MC1-MC3) for determining the position of said terminal (UE) from said acquired codes and from navigation data contained in said received signals, which terminal is **characterised in that** said acquisition means (CR), on receiving assistance data representing an approximate reference time and the approximate position of said terminal (UE), determine estimated positions of said constellation of satellites (SN), estimated distances between said terminal (UE) and each of said satellites (SN) in view and associated Doppler effects as a function of pairs of hypotheses relating to said approximate reference time and said approximate position, and then determine a composite signal replica for each pair of hypotheses corresponding to said estimated positions and distances and to said associated Doppler effects over a selected time interval, which composite replica originates from the sum of replica signals of satellites in view, and select the pair of hypotheses corresponding to the signal replica having a maximum correlation with the received signal during said time interval in order to determine said pseudo-random codes modulating said received signals.

**16.** Terminal according to claim 15, **characterised in that** it is adapted to communicate within a cellular communication network each cell of which is managed by a base station (BTS) and said approximate position represents the cell in which it is situated when it requests said assistance data.

**17.** Terminal according to claim 16, **characterised in that** said acquisition means (CR) comprise a timing clock slaved to the timing clock of the base station (BTS) managing the cell in which it is situated.

18. Terminal according to any one of claims 15 to 17, **characterised in that** said acquisition means (CR) select a signal replica by determining for each signal replica a function representing its energy of correlation with said signal received during the time interval and thereafter retain the signal replica having the highest energy.

19. Terminal according to any one of claims 15 to 18, **characterised in that** said assistance data comprises complementary navigation data selected in a group comprising at least ephemerides of the satellites (SN) in view, first time corrections of said satellites (SN) in view representing the time difference between said reference time and their timing clock, and second time corrections representing disturbances induced by the ionosphere to the propagation of the signals transmitted by said satellites (SN) in view.

20. Terminal according to any one of claims 15 to 19, **characterised in that** said assistance data comprises data representing a three-dimensional model of the cell in which said requesting terminal (UE) is situated.

21. Terminal according to claim 20, **characterised in that** it determines said position with the aid of said data representing a three-dimensional cell model received.

22. Terminal according to any one of claims 15 to 21, **characterised in that** said assistance data comprises complementary navigation data coming from an augmentation system (SG) connected to said satellite navigation system (CS).

23. Terminal according to any one of claims 18 to 22, **characterised in that** it transmits to an assistance server (SE) of said cellular communication network information data representing its position so that said information data can be stored in a database (BD) in corresponding relationship to an identifier of the cell in which it is situated.

24. Terminal according to any one of claims 15 to 23, **characterised in that** it comprises a micro-inertia measuring device (DM) for delivering measurements representing the dynamics of said terminal and said acquisition means (CR) are adapted to estimate from said measurements and said assistance data a speed, an acceleration and a variation of acceleration relative to each satellite (SN) in view, to deduce therefrom an induced phase, and then to determine said signal replica taking account of said induced phase.

25. Terminal according to claim 24, **characterised in that** said measuring device (DM) takes the form of a micro-inertia micro-electro-mechanical system.

26. Assistance server (SE) for a cellular communication network communicating with mobile terminals (UE), **characterised in that** it transmits assistance data via said communication network to mobile terminals (UE) according to any one of claims 15 to 25 after receiving requests emanating therefrom.

27. Server according to claim 26, **characterised in that** it transmits to each requesting terminal (UE) assistance data comprising complementary navigation data selected in a group comprising at least ephemerides of the satellites (SN) in view, first time corrections of said satellites (SN) in view from said terminal (UE) representing the time difference between said reference time and the timing clock of the terminal (UE), and second time corrections representing disturbances induced by the ionosphere to the propagation of the signals transmitted by said satellites (SN) in view from said terminal and data representing a three-dimensional model of the cell in which said requesting terminal (UE) is situated.

28. Server according to either claim 26 or claim 27, **characterised in that** it comprises receiver means (R) for receiving messages from a satellite navigation system (CS) and transmitting to each requesting terminal (UE) assistance data comprising navigation data extracted from messages coming from said satellite navigation system (CS).

29. Server according to claim 28, **characterised in that** said receiver means (R) receive messages from an augmentation system connected to said satellite navigation system (CS) and transmit to each requesting terminal (UE) assistance data comprising complementary navigation data extracted from messages coming from said augmentation system and representing said satellite navigation system (CS).

30. Server according to any one of claims 26 to 29, **characterised in that** it comprises processing means (PM) which, on receiving information data representing the position of a terminal (UE), store said information data in a database (BD) in corresponding relationship to an identifier of the cell of a cellular communication network in which said terminal (UE) is situated.

31. Server according to claim 30, **characterised in that** said processing means (PM) determine auxiliary data representing the quality of said received information data and store that auxiliary data in said database (BD) in corresponding relationship to said cell identifier and said information data representing the position of the terminal (UE).

32. Server according to either claim 30 or claim 31, **characterised in that** said processing means (PM) generate a three-dimensional model of said communication network from said cell identifiers and said information data and/or corresponding auxiliary data and then store said three-dimensional model of the communication network in said database (BD).

33. Server according to claim 26 in combination with claim 32, **characterised in that** said processing means (PM) extract from said database (BD) a portion of said three-dimensional model of the communication network representing said three-dimensional model of the cell in which said requesting terminal (UE) is situated in order to transmit it to it.

34. Server according to any one of claims 26 to 32, **characterised in that** said processing means (PM) extract from a database (BD) storing portions of a three-dimensional model of said communication network in corresponding relationship to cell identifiers the portion of the model stored in corresponding relationship to the identifier of the cell in which a requesting terminal (UE) is situated in order to transmit said extracted portion to it.

35. Use of the method, mobile terminal (UE) and assistance server (SE) according to any one of the preceding claims for multiple-access phase-modulated L-band signals.

36. Use according to claim 35, **characterised in that** said multiple-access phase-modulation is effected in accordance with the W-CDMA technique.

37. Use of the method, mobile terminal (UE) and assistance server (SE) according to any one of claims 1 to 34 in RNSS type satellite positioning networks (SN).

38. Use according to claim 37, **characterised in that** said satellite positioning network (SN) is of the GPS type.

**Patentansprüche**

1. Verfahren zur Positionsbestimmung eines Mobilendgerätes (UE), umfassend einen Schritt der Erfassung durch das Endgerät (UE) von Pseudozufallscodes, welche Signale modulieren, die von Satelliten (SN) mit Sichtkontakt, die zu einer Konstellation (CS) von Positionsbestimmungssatelliten gehören und die auf eine Bezugszeit bezogen sind, empfangen wurden, und zwar durch Vergleich mit aus Hypothesen resultierenden Signalantworten; und einen Schritt zur Bestimmung der Position des Endgerätes (UE) anhand der erfassten Codes und der in den Signalen enthaltenen Navigationsdaten, **dadurch gekennzeichnet, dass** beim Schritt der Erfassung i) an das Endgerät (UE) Unterstützungsdaten übermittelt werden, die für eine ungefähre Bezugszeit und seine ungefähre Position repräsentativ sind; ii) dass geschätzte Positionen der Konstellation (CS) von Satelliten (SN), geschätzte Entfernungen zwischen dem Endgerät (UE) und jedem der Satelliten (SN) mit Sichtkontakt sowie dazugehörige Dopplereffekte in Abhängigkeit von Hypothesenpaaren bestimmt werden, die sich auf die ungefähre Bezugszeit und die ungefähre Position beziehen; iii) dass für jedes Hypothesenpaar, das sich auf die ungefähre Bezugszeit und die ungefähre empfangene Position bezieht, eine zusammengesetzte Signalantwort bestimmt wird, die den geschätzten Positionen und Entfernungen und den dazugehörigen Dopplereffekten über ein gewähltes Zeitintervall entspricht, wobei die zusammengesetzte Antwort aus der Summe der Antworten der Signale von den Satelliten mit Sichtkontakt hervorgeht; und iv) dass das Hypothesenpaar ausgewählt wird, welches der Signalantwort entspricht, die eine maximale Korrelation mit dem während des Zeitintervalls empfangenen Signal aufweist, sodass die Pseudozufallscodes zur Modulierung der empfangenen Signale bestimmt werden.

2. Verfahren nach Anspruch 1, **dadurch gekennzeichnet, dass** die unterstützenden Daten von einem Unterstützungs-Server (SE) stammen, der mit einem zellularen Kommunikationsnetz verbunden ist, von dem das Endgerät (UE) abhängt.

3. Verfahren nach Anspruch 2, **dadurch gekennzeichnet, dass** die Unterstützungsdaten an das Endgerät (UE) über das zellulare Kommunikationsnetz übertragen werden.

4. Verfahren nach einem der Ansprüche 2 und 3, **dadurch gekennzeichnet, dass** die ungefähre Position repräsentativ für die Zelle ist, in der sich das Endgerät (UE) befindet, wenn es die Unterstützungsdaten anfordert.

5. Verfahren nach Anspruch 4, **dadurch gekennzeichnet, dass** der Erfassungstaktgeber dieses Endgerätes (UE) auf den Taktgeber der Basisstation (BTS) geregelt wird, welche die Zelle verwaltet, in der es sich befindet.

6. Verfahren nach einem der Ansprüche 1 bis 5, **dadurch gekennzeichnet, dass** die Auswahl einer Signalantwort darin besteht, für jede Signalantwort eine Funktion zu bestimmen, die für ihre Korrelationsenergie mit dem während des Zeitintervalls empfangenen Signal repräsentativ ist und darin, dass die Signalantwort gewählt wird, deren Energie die stärkste ist.

7. Verfahren nach einem der Ansprüche 1 bis 6, **dadurch gekennzeichnet, dass** die Unterstützungsdaten ergänzende Navigationsdaten umfassen, die aus einer Gruppe gewählt werden, die mindestens umfasst: die Ephemeriden der Satelliten (SN) mit Sichtkontakt, erste Zeitkorrekturen der Satelliten mit Sichtkontakt, die für die Zeitabweichung zwischen der Bezugszeit und ihrem Taktgeber repräsentativ sind, sowie zweite Zeitkorrekturen, die für die Störungen repräsentativ sind, die durch die Ionosphäre bei der Ausbreitung der von den Satelliten (SN) mit Sichtkontakt übertragenen Signale verursacht werden.

8. Verfahren nach einem der Ansprüche 1 bis 7, **dadurch gekennzeichnet, dass** die Unterstützungsdaten ergänzende Navigationsdaten umfassen, die von einem mit dem Satellitennavigationssystem (CS) gekoppelten Verbesserungssystem (SG) stammen.

9. Verfahren nach einem der Ansprüche 1 bis 8, **dadurch gekennzeichnet, dass** die Unterstützungsdaten Daten umfassen, die für ein dreidimensionales Modell der Zelle repräsentativ sind, in der sich das anfordernde Endgerät (UE) befindet.

10. Verfahren nach einem der Ansprüche 1 bis 9, **dadurch gekennzeichnet, dass** Informationsdaten gespeichert werden, die für die Position des Endgerätes (UE) repräsentativ sind, und zwar in der Weise, dass die Position als Entsprechung zu einer Kennung der Zelle gespeichert wird, in der es sich befindet.

11. Verfahren nach Anspruch 10, **dadurch gekennzeichnet, dass** außerdem die Position als Entsprechung zu Hilfsdaten gespeichert wird, die für die Qualität der übertragenen Informationsdaten repräsentativ sind.

12. Verfahren nach der Kombination von Anspruch 4 mit einem der Ansprüche 10 und 11, **dadurch gekennzeichnet, dass** ein dreidimensionales Modell des Kommunikationsnetzes anhand der Zellenkennungen und der Informationsdaten und/oder der entsprechenden Hilfsdaten erzeugt wird und dass anschließend das dreidimensionale Modell des Kommunikationsnetzes gespeichert wird.

13. Verfahren nach der Kombination der Ansprüche 9 und 12, **dadurch gekennzeichnet, dass** das an das Endgerät (UE) übertragene dreidimensionale Zellenmodell ein Teil des dreidimensionalen Modells des Kommunikationsnetzes ist.

14. Verfahren nach einem der Ansprüche 1 bis 13, **dadurch gekennzeichnet, dass** repräsentative Messungen der Dynamik des Endgerätes (UE) durchgeführt werden und **dadurch**, dass ausgehend von den Messungen und den Unterstützungsdaten eine Geschwindigkeit, eine Beschleunigung und eine Beschleunigungsänderung bezogen auf jeden Satelliten (SN) mit Sichtkontakt geschätzt werden und dass anschließend von diesen eine induzierte Phase abgeleitet wird und dass die Signalantwort unter Berücksichtigung der induzierten Phase bestimmt wird.

15. Mobilendgerät (UE), umfassend Vorrichtungen (CR) zur Erfassung von Pseudozufallscodes, welche Signale modulieren, die von Satelliten (SN) mit Sichtkontakt, die zu einer Konstellation (CS) von Positionsbestimmungssatelliten gehören und die auf eine Bezugszeit bezogen sind, empfangen wurden, und zwar durch Vergleich mit aus Hypothesen resultierenden Signalantworten; sowie [umfassend] Rechenvorrichtungen (MC1-MC3), die dazu geeignet sind, die Position des Endgerätes (UE) anhand der erfassten Codes und der in den Signalen enthaltenen Navigationsdaten zu bestimmen, **dadurch gekennzeichnet, dass** die Erfassungsvorrichtungen (CR) dafür eingerichtet sind, beim Empfang von Unterstützungsdaten, die für eine ungefähre Bezugszeit und die ungefähre Position des Endgerätes (UE) repräsentativ sind, geschätzte Positionen der Konstellation (CS) von Satelliten (SN), geschätzte Entfernungen zwischen dem Endgerät (UE) und jedem der Satelliten (SN) mit Sichtkontakt sowie dazugehörige Dopplereffekte in Abhängigkeit von Hypothesenpaaren zu bestimmen, die sich auf die ungefähre Bezugszeit und die ungefähre Position beziehen; und [die dafür eingerichtet sind,] danach für jedes Hypothesenpaar eine zusammengesetzte Signalantwort zu bestimmen, die den geschätzten Positionen und Entfernungen und den dazugehörigen Dopplereffekten über ein gewähltes Zeitintervall entspricht, wobei die zusammengesetzte Antwort aus der Summe der Antworten der Signale von den Satelliten mit Sichtkontakt hervorgeht; und [die dafür eingerichtet sind,] das Hypothesenpaar auszuwählen, welches der Signalantwort entspricht, die eine maximale Korrelation mit dem während des Zeitintervalls empfangenen Signal aufweist, sodass die Pseudozufallscodes zur Modulierung der empfangenen Signale bestimmt werden.

16. Endgerät nach Anspruch 15, **dadurch gekennzeichnet, dass** es dafür eingerichtet ist, innerhalb eines zellularen Kommunikationsnetzes zu kommunizieren, von dem jede Zelle von einer Basisstation (BTS) verwaltet wird, sowie **dadurch**, dass die ungefähre Position repräsentativ für die Zelle ist, in der es sich befindet, wenn es die Unterstützungsdaten anfordert.

17. Endgerät nach Anspruch 16, **dadurch gekennzeichnet, dass** die Erfassungsvorrichtungen (CR) einen Taktgeber umfassen, der auf den Taktgeber der Basisstation (BTS) geregelt ist, welche die Zelle verwaltet, in der es sich befindet.

18. Endgerät nach einem der Ansprüche 15 bis 17, **dadurch gekennzeichnet, dass** die Erfassungsvorrichtungen (CR) dafür eingerichtet sind, eine Signalantwort auszuwählen, indem für jede Signalantwort eine Funktion bestimmt wird, die für ihre Korrelationsenergie mit dem während des Zeitintervalls empfangenen Signal repräsentativ ist und dafür, dass die Signalantwort gewählt wird, deren Energie die stärkste ist.

19. Endgerät nach einem der Ansprüche 15 bis 18, **dadurch gekennzeichnet, dass** die Unterstützungsdaten ergänzende Navigationsdaten umfassen, die aus einer Gruppe gewählt werden, die mindestens umfasst: die Ephemeriden der Satelliten (SN) mit Sichtkontakt, erste Zeitkorrekturen der Satelliten mit Sichtkontakt, die für die Zeitabweichung zwischen der Bezugszeit und ihrem Taktgeber repräsentativ sind, sowie zweite Zeitkorrekturen, die für die Störungen repräsentativ sind, die durch die Ionosphäre bei der Ausbreitung der von den Satelliten (SN) mit Sichtkontakt übertragenen Signale verursacht werden.

20. Endgerät nach einem der Ansprüche 15 bis 19, **dadurch gekennzeichnet, dass** die Unterstützungsdaten Daten umfassen, die für ein dreidimensionales Modell der Zelle repräsentativ sind, in der sich das anfordernde Endgerät (UE) befindet.

21. Endgerät nach Anspruch 20, **dadurch gekennzeichnet, dass** es dafür eingerichtet ist, die Position mit Hilfe der Daten zu bestimmen, die für ein empfangenes dreidimensionales Zellenmodell repräsentativ sind.

22. Endgerät nach einem der Ansprüche 15 bis 21, **dadurch gekennzeichnet, dass** die Unterstützungsdaten ergänzende Navigationsdaten umfassen, die von einem mit dem Satellitennavigationssystem (CS) gekoppelten Verbesserungssystem (SG) stammen.

23. Endgerät nach einem der Ansprüche 18 bis 22, **dadurch gekennzeichnet, dass** es dafür eingerichtet ist, an einen Unterstützungs-Server (SE) des zellularen Kommunikationsnetzes für seine Position repräsentative Informationsdaten zu übertragen, sodass die Informationsdaten in einer Datenbank (BD) als Entsprechung zu einer Kennung der Zelle gespeichert werden können, in der es sich befindet.

24. Endgerät nach einem der Ansprüche 15 bis 23, **dadurch gekennzeichnet, dass** es eine Mikroträgheits-Messvorrichtung (DM) umfasst, die dazu geeignet ist, für die Dynamik des Endgerätes repräsentative Messungen zu liefern, und **dadurch**, dass die Erfassungsvorrichtungen (CR) dafür eingerichtet sind, ausgehend von diesen Messungen und den Unterstützungsdaten eine Geschwindigkeit, eine Beschleunigung und eine Beschleunigungsänderung bezogen auf jeden Satelliten (SN) mit Sichtkontakt zu schätzen und von diesen eine induzierte Phase abzuleiten und danach die Signalantwort unter Berücksichtigung der induzierten Phase zu bestimmen.

25. Endgerät nach Anspruch 24, **dadurch gekennzeichnet, dass** die Messvorrichtung (DM) in Form eines elektromechanischen Mirkosystems mit Mikroträgheit eingerichtet sind.

26. Unterstützungs-Server (SE) für ein zellulares Kommunikationsnetz, welches mit Mobilendgeräten (UE) kommuniziert, **dadurch gekennzeichnet, dass** er dafür eingerichtet ist, Unterstützungsdaten über das Kommunikationsnetz an Mobilendgeräte (UE) nach einem der Ansprüche 15 bis 25 zu übertragen, nachdem er von diesen ausgehende Anforderungen erhalten hat.

27. Server nach Anspruch 26, **dadurch gekennzeichnet, dass** er dafür eingerichtet ist, an jedes anfordernde Endgerät (UE) Unterstützungsdaten zu übertragen, die ergänzende Navigationsdaten umfassen, welche aus einer Gruppe gewählt werden, die mindestens umfasst: die Ephemeriden der Satelliten (SN) mit Sichtkontakt, erste Zeitkorrekturen der Satelliten (SN) mit Sichtkontakt, die für die Zeitabweichung zwischen der Bezugszeit und dem Taktgeber des Endgerätes (UE) repräsentativ sind, sowie zweite Zeitkorrekturen, die für die Störungen repräsentativ sind, die durch die Ionosphäre bei der Ausbreitung der von den Satelliten (SN) mit Sichtkontakt an das Endgerät übertragenen Signale verursacht werden, sowie Daten, die für ein dreidimensionales Modell der Zelle repräsentativ sind, in der sich das anfordernde Endgerät (UE) befindet.

28. Server nach einem der Ansprüche 26 und 27, **dadurch gekennzeichnet, dass** er Empfangsvorrichtungen (R) umfasst, die dafür geeignet sind, Nachrichten von einem Satellitennavigationssystem (CS) zu empfangen, und **dadurch**, dass er dafür eingerichtet ist, an jedes anfordernde Endgerät (UE) Unterstützungsdaten zu übertragen, die Navigationsdaten umfassen, welche aus den vom Satellitennavigationssystem (CS) stammenden Nachrichten extrahiert wurden.

29. Server nach Anspruch 28, **dadurch gekennzeichnet, dass** die Empfangsvorrichtungen (R) dazu geeignet sind, Nachrichten von einem mit dem Satellitennavigationssystem (CS) gekoppelten Verbesserungssystem zu empfangen, und **dadurch**, dass er dafür eingerichtet ist, an jedes anfordernde Endgerät (UE) Unterstützungsdaten zu übertragen, welche ergänzende Navigationsdaten umfassen, die aus den von dem Verbesserungssystem stammenden Nachrichten extrahiert wurden und die für das Satellitennavigationssystem (CS) repräsentativ sind.

30. Server nach einem der Ansprüche 26 bis 29, **dadurch gekennzeichnet, dass** er Verarbeitungsvorrichtungen (PM) umfasst, die dafür eingerichtet sind, beim Empfang von für die Position eines Endgerätes (UE) repräsentativen Informationsdaten in einer Datenbank (BD) die Informationsdaten als Entsprechung zu einer Kennung der Zelle eines zellularen Kommunikationsnetzes zu speichern, in der sich das Endgerät (UE) befindet.

31. Server nach Anspruch 30, **dadurch gekennzeichnet, dass** die Verarbeitungsvorrichtungen (PM) dafür eingerichtet sind, Hilfsdaten zu bestimmen, die für die Qualität der empfangenen Informationsdaten repräsentativ sind, und dafür, diese Hilfsdaten in der Datenbank (BD) als Entsprechung zu der Kennung der Zelle und zu den für die Position des Endgerätes (UE) repräsentativen Informationsdaten zu speichern.

32. Server nach einem der Ansprüche 30 und 31, **dadurch gekennzeichnet, dass** die Verarbeitungsvorrichtungen (PM) dafür eingerichtet sind, ein dreidimensionales Modell des Kommunikationsnetzes ausgehend von den Zellenkennungen und den Informationsdaten und/oder den entsprechenden Hilfsdaten zu erzeugen und anschließend das dreidimensionale Modell des Kommunikationsnetzes in der Datenbank (BD) zu speichern.

33. Server nach der Kombination der Ansprüche 36 und 32, **dadurch gekennzeichnet, dass** die Verarbeitungsvorrichtungen (PM) dafür eingerichtet sind, aus der Datenbank (BD) einen Teil des dreidimensionalen Modells des Kommunikationsnetzes zu extrahieren, der für das dreidimensionale Modell der Zelle repräsentativ ist, in der sich das anfordernde Endgerät (UE) befindet, sodass [dieser Teil] an das Endgerät übertragen wird.

34. Server nach einem der Ansprüche 26 bis 32, **da-**

**durch gekennzeichnet, dass** die Verarbeitungsvorrichtungen (PM) dafür eingerichtet sind, aus einer Datenbank (BD), die Teile eines dreidimensionalen Modells des Kommunikationsnetzes als Entsprechung zu Zellenkennungen speichert, den Teil des Modells zu extrahieren, der als Entsprechung zur Kennung derjenigen Zelle gespeichert ist, in der sich ein anforderndes Endgerät (UE) befindet, sodass an dieses der extrahierte Teil übertragen wird.

35. Nutzung des Verfahrens, des Mobilendgerätes (UE) und des Unterstützungs-Servers (SE) nach einem der vorhergehenden Ansprüche für phasenmodulierte L-Signale mit Mehrfachzugriff.

36. Nutzungsweise nach Anspruch 35, **dadurch gekennzeichnet, dass** die Phasenmodulation mit Mehrfachzugriff nach der mit W-CDMA bezeichneten Technik erfolgt.

37. Nutzungsweise des Verfahrens, des Mobilendgerätes (UE) und des Unterstützungs-Servers nach einem der Ansprüche 1 bis 34 in Satellitenpositionierungsnetzen (SN) des RNSS-Typs.

38. Nutzungsweise nach Anspruch 37, **dadurch gekennzeichnet, dass** das Satellitenpositionierungsnetz (SN) dem GPS-Typ entspricht.

SN

SG

CS

UE

FIG.1

RC    DPS

R

BD

SE

PM

BTS

UE    MER    MI

CR

MT    DPS

MC1    DM

MC2    MC3

FIG.2

RC

MG

Sat 1

Sat 2

Bâtiment

MS

Données
transmises

Haute probabilité
d'être bloqué ou
zone de réfléxion
probable

Satellite 1

Satellite 2

FIG 3